Europäisches Patentamt

European Patent Office

Office européen des brevets

(11) Veröffentlichungsnummer: **0 397 084**

**A1**

(12) **EUROPÄISCHE PATENTANMELDUNG**

(21) Anmeldenummer: **90108579.5**

(22) Anmeldetag: **07.05.90**

(51) Int. Cl.5: **A23L 1/29, A23L 1/308,**
**A23G 9/02, A23G 3/00**

(30) Priorität: **10.05.89 DE 3915244**

(43) Veröffentlichungstag der Anmeldung:
**14.11.90 Patentblatt 90/46**

(84) Benannte Vertragsstaaten:
**AT BE CH DE DK FR GB IT LI NL SE**

(71) Anmelder: **HOECHST AKTIENGESELLSCHAFT**
**Postfach 80 03 20**
**D-6230 Frankfurt am Main 80(DE)**

(72) Erfinder: **Lotz, Andreas, Dr.**
**Parkstrasse 10**
**D-6233 Kelkheim, (Taunus)(DE)**
Erfinder: **Lück, Erich, Dr.**
**Robert-Stolz-Strasse 102**
**D-6232 Bad Soden am Taunus(DE)**
Erfinder: **Klug, Christian, Dr.**
**Friedrich-Ebert-Strasse 15**
**D-6231 Schwalbach am Taunus(DE)**
Erfinder: **Von Rymon Lipinski, Gert-Wolfhard,**
**Dr.**
**Hunsrückstrasse 40**
**D-6230 Frankfurt am Main 80(DE)**

(54) **Lebensmittel mit Süssgeschmack mit vermindertem Kaloriengehalt, die als Füllstoffe Derivate von wasserlöslichen Polysacchariden enthalten.**

(57) Lebensmittel mit Süßgeschmack mit vermindertem Kaloriengehalt, die als Füllstoffe mit niedrigem Brennwert wasserlösliche Polysaccharide enthalten, die durch Umsetzung von Aldohexosen oder Kohlenhydraten, die sich zu mindestens 50 Mol-% von Aldohexosen als Monomerbausteinen ableiten, gewonnen werden und mit mehrwertigen Alkoholen modifiziert sind, dadurch gekennzeichnet, daß sie als Süßungsmittel in einer physiologisch annehmbaren Menge
     a) Acesulfam oder
     b) synthetische Süßstoffe allgemein und
     c) solche der obengenannten Polysaccharide enthalten, bei deren Herstellung Fluorwasserstoff als Säure und gleichzeitig als Lösungsmittel verwendet worden ist.

EP 0 397 084 A1

## Lebensmittel mit Süßgeschmack mit vermindertem Kaloriengehalt, die als Füllstoffe Derivate von wasserlöslichen Polysacchariden enthalten

Es ist bereits bekannt, wasserlösliche Polysaccharide, die einen Gehalt an mehrwertigen Alkoholen aufweisen und die durch Umsetzung von Aldosen, speziell Aldohexosen, oder Kohlenhydraten, die sich zu mindestens 50 Mol.-% von Aldosen, speziell Aldohexosen, als Monomerbausteinen ableiten, mit mehrwertigen Alkoholen und Fluorwasserstoff hergestellt worden sind, als Lebensmittelzusatzstoff zu verwenden (vgl. EP-OS 166 362 = US-PS 47 66 207). Solche Stoffe, die mit lebensmitteltechnisch unbedenklichen mehrwertigen Alkoholen hergestellt worden sind, sind nach dieser Literaturstelle als Lebensmittelzusatzstoffe mit vermindertem Kalorienwert als diätetische Nahrungsmittelbestandteile in verschiedenen Lebensmitteln einsetzbar, wie in Bonbons, Schokoladenpudding, Gebäck oder Gelatine-Desserts. In derartigen Speisen und Nahrungsmitteln wirken sie als Gerüststoffe mit niedrigem Kaloriengehalt, indem sie die Textur bzw. Struktur z.B. von Mehl und Saccharose anteilig ersetzen können. Derartige Polysaccharide werden durch Verdauungsenzyme, wie $\alpha$-Amylase und Amyloglukosidase sowie $\beta$-Galactosidase, nur in untergeordnetem Ausmaß abgebaut.

In allen Beispielen der EP-OS 166 362, die Lebensmittelzubereitungen mit Süßgeschmack betreffen, werden diese Austauschstoffe zusammen mit Zucker, also einem natürlichen Kohlenhydrat verwendet.

Wenngleich sich auf die angegebene Weise der Kalorienwert in Lebensmitteln mit Süßgeschmack in gewissem Ausmaß vermindern läßt, so ist es doch in vielen Fällen wünschenswert, den Kaloriengehalt weiter zu erniedrigen. Dies wird nun durch die Erfindung ermöglicht.

Gleichzeitig sollten dabei die auf diese Weise herzustellenden Lebensmittel mit vermindertem Kaloriengehalt die gleichen sensorischen und texturellen Eigenschaften wie nicht veränderte, mit Zuckern hergestellte Lebensmittel besitzen. Dies wird durch die vorliegende Erfindung ebenfalls ermöglicht.

Weiterhin sind bereits diätetische Nahrungsmittel unter Verwendung wasserlöslicher, hochverzweigter Polyglucose, die etwa 0,5 bis 5 Mol.-% Carbonsäureestergruppen enthält, als Ersatz für die im Lebensmittel enthaltenen Kohlenhydrate bekannt (DE-OS 23 50 035, GB-PS 14 18 544 = Kan.PS 10 16 006). In dieser Literaturstelle ist auch die gleichzeitige Verwendung künstlicher Süßstoffe wie L-Asparagylphenylalaninmethylester (Aspartam) für die Herstellung süßer Lebensmittel angesprochen. Weiterhin ist dieser Literaturstelle zu entnehmen, daß für die Anwendung in "einigen" diätetischen Nahrungsmitteln trotz der niedrigen Mengen an Restsäure eine Neutralisation der Polyglucosen erforderlich ist, die durch Zugabe von Carbonaten des Kaliums, Natriums, Kalziums und Magnesiums erreicht werden kann.

Es hat sich jedoch gezeigt, daß sich in Wirklichkeit die meisten dieser diätetischen Nahrungsmittel ohne vorherige Neutralisation nicht eignen. Dies ist dadurch bedingt, daß die Acidität (gewöhnlich um etwa pH 2,8) nicht nur Produkte, die Vollmilch enthalten, durch Gerinnen ungeeignet macht, sondern auch Backwaren, Fruchtsäften, Dessertspeisen u.dgl. eine zu starke Acidität verleiht, die beim Verbraucher sensorische, also geschmackliche Abneigung hervorrufen. Die Acidität wirkt sich auch bei der Zubereitung der einzelnen diätetischen Nahrungsmittel durch Einwirkung auf deren andere Komponenten nachteilig aus und auch dadurch, daß die zu ihrer Beseitigung erforderliche Neutralisation einen zusätzlichen Arbeitsgang bedingt, die Herstellung also aufwendiger gestaltet.

Gegenstand der Erfindung sind nun Lebensmittel mit vermindertem Kaloriengehalt, angenehmem Geschmack und sehr guten texturellen Eigenschaften, die als Füllstoffe mit niedrigem Brennwert wasserlösliche Polysaccharide enthalten, die durch Umsetzung von Aldohexosen oder Kohlenhydraten, die sich zu mindestens 50 Mol-% von Aldohexosen als Monomerbausteinen ableiten, gewonnen werden und die mit mehrwertigen Alkoholen modifiziert sind, die dadurch gekennzeichnet sind, daß sie als Süßungsmittel in einer physiologisch annehmbaren Menge

    a) Acesulfam oder

    b) synthetische Süßstoffe allgemein und

    c) solche der obengenannten Polysaccharide enthalten, bei deren Herstellung Fluorwasserstoff als Säure und gleichzeitig als Lösungsmittel verwendet worden ist.

Bei der Verwendung von wasserlöslichen Polysacchariden, die durch Umsetzung von Aldohexosen oder Kohlenhydraten mit mehrwertigen Alkoholen und Fluorwasserstoff gewonnen werden, ist eine Neutralisation, wie zuvor beschrieben, nicht erforderlich. Es hat sich vielmehr überraschenderweise gezeigt, daß die so gewonnenen wasserlöslichen Polysaccharide in Kombination mit künstlichen Süßstoffen wie Acesulfam, Saccharin, Cyclamat und Aspartam zur Herstellung von Lebensmitteln mit Süßgeschmack und vermindertem Kaloriengehalt hervorragend geeignet sind. Es wird einerseits ein angenehmer Süßgeschmack im Lebensmittel erzeugt, und andererseits besitzen diese Lebensmittel sehr gute texturelle Eigenschaften, die sonst nur durch die Verwendung von Zucker erreicht werden können. Die genannten Polysaccharide besitzen dabei dem Zucker sehr ähnliche physikalisch-chemische Eigenschaften.

Die Herstellung der Polysaccharide unter Mitverwendung von Fluorwasserstoff ist in der EP-OS 166 362 ausführlich beschrieben.

Die genannten Polysaccharide lassen sich mit Süßungsmitteln hervorragend zur Herstellung von Lebensmitteln mit verringertem Kaloriengehalt einsetzen. Als Süßungsmittel kommen hierbei unter anderem die vorgenannten Stoffe in Frage. Die Süßungsmittel können entweder einzeln oder in Kombinationen in jeweils physiologisch annehmbaren Mengen eingesetzt werden. Die genannten Süßungsmittel erzeugen zusammen mit den genannten Polysacchariden einen sehr angenehmen vollmundigen Geschmack.

Mit den genannten Polysacchariden und Süßungsmitteln läßt sich auch die Anwendung von Zuckeralkoholen wie Sorbit, Xylit, Lactit, Mannit und Isomalt in Lebensmitteln kombinieren. Die Zuckeralkohole können hierbei sowohl die Funktion eines Süßungsmittels mit fehlender kariogener Wirkung als auch die Funktion eines Füllstoffes zur Erzeugung einer typischen Textur bzw. Struktur des Lebensmittels ausüben.

Typische Verwendungszwecke für die genannten Polysaccharide und Süßstoffe sind die Herstellung von festen Lebensmitteln, wie Backwaren und Süßwaren. Der Verbraucher wünscht derartige Lebensmitteln die einen verringerten Brennwert haben. Durch die genannten Polysaccharide und Süßungsmittel lassen sich aber auch Lebensmittel mit vermindertem Kaloriengehalt in flüssiger oder halbfester Form herstellen. Insbesondere bei Getränken wird durch die Anwendung der genannten Polysaccharide eine angenehme Vollmundigkeit erreicht. Weiterhin lassen sich durch die Anwendung der genannten Produkte Dessertspeisen verschiedener Art, wie Gelatinedessert, Speiseeis, Puddings und dergleichen herstellen.

Die Herstellung der genannten Polysaccharide unter Mitverwendung von Fluorwasserstoff ist in der EP-OS 106 362 ausführlich beschrieben. Für die Herstellung der Polysaccharide können in Nahrungsmitteln zugelassene mehrwertige Alkohole wie Sorbit oder Xylit verwendet werden, die im Polysaccharid im allgemeinen in einer Menge von 0,01-20 %, bezogen auf das Gewicht von Aldohexose und Kohlenhydrat, enthalten sind.

Die Anwendung der erfindungsgemäß verwendeten wasserlöslichen Polysaccharide in Kombination mit Süßstoffen wird im folgenden zur näheren Erläuterung der Erfindung anhand von Beispielen dargestellt. Für die Ausführung der Rezepte, die für die Nahrungsmittel mit vermindertem Kaloriengehalt in den folgenden Beispielen angegeben sind, lassen sich übliche standardisierte Herstellungsverfahren anwenden, wobei die Polysaccharide stets in Pulverform verwendet wurden. Bei den Vergleichsprüfungen mit den mit Zucker hergestellten Proben wurde eine Dreiecksprüfung durchgeführt. Dabei werden drei Proben verglichen, von denen zwei identisch sind, wobei für den Probanden nicht erkennbar ist, ob zwei mit Zucker oder zwei ohne Zucker hergestellte Vergleichsproben vorliegen.

## Beispiele

| 1) Sponge-Cake | | |
|---|---|---|
| Bestandteile: | Weizenmehl | 100 g |
| | Polysaccharid (EP-OS 166 362, Bsp. 3) | 100 g |
| | Ei | 60 g |
| | Magermilchpulver | 10 g |
| | Erdnußöl | 15 g |
| | Natriumchlorid | 1 g |
| | Natriumhydrogencarbonat | 5 g |
| | Wasser | 50 g |
| | Saccharin | 0,4 g |
| | Emulgator (Spongolit, Fa. Chem. Fabrik Grünau GmbH, Illertissen/Deutschland) | 6 g |

Zur Herstellung wurden die Komponenten in einem Hobart-Mischer verrührt und unter Zugabe des Emulgators aufgeschlagen. Anstelle des genannten Emulgators lassen sich auch alle anderen lebensmittelrechtlich zugelassenen Emulgatoren, gegebenenfalls in anderen Mengen, verwenden. Der Teig wurde bei ca. 200 °C etwa 20-25 Minuten gebacken. Der fertige Sponge-Cake ließ sich bezüglich Geschmack und Vollmundigkeit nicht von einer mittels Zucker hergestellten Kontrolle unterscheiden.

| 2) Gebäck | | |
|---|---|---|
| Bestandteile: | Polysaccharid (EP-OS 166 362, Bsp. 7) | 70 g |
| | Zucker | 20 g |
| | Magermilchpulver | 5 g |
| | Pflanzenfett | 5 g |
| | Glucosesirup | 5 g |
| | Ei | 20 g |
| | Wasser | 30 g |
| | Mehl | 180 g |
| | Salze (NaCl/NaHCO$_3$ = 1:5) | 5 g |
| | Vanillearoma | 2 g |
| | Acesulfam-K | 0,8 g |

Zur Herstellung wurde das Polysaccharid zusammen mit Magermilchpulver, Salz, Pflanzenfett und Glucosesirup zu einer cremigen Masse vermischt; anschließend erfolgte die Zugabe von Eiern, Wasser, Vanillearoma und Süßstoff. Das mit den Salzen gut durchmischte Mehl wurde unter Rühren in einem Hobart-Mischer zugegeben. Der Teig wurde nach Formung 12 Minuten bei 200 °C gebacken. Das so gewonnene Gebäck hatte eine typische Textur und angenehme geschmackliche Eigenschaften.

| 3) Trübe Orangenlimonade | | |
|---|---|---|
| Bestandteile: | Orangenkonzentratgrundstoff | 50 g |
| | Polysaccharid (EP-OS 166 362, Bsp. 3) | 100 g |
| | Acesulfam-K | 0,4 g |
| | Dipeptidsüßstoff (Aspartam) | 0,4 g |
| | Mineralwasser | auffüllen auf 2000 ml |

Die so gewonnene Orangenlimonade hatte einen sehr angenehmen vollmundigen Geschmack, der sich durch die alleinige Verwendung von anderen Zuckeraustauschstoffen nicht erreichen läßt.

| 4) Kirschbonbons | | |
|---|---|---|
| Bestandteile: | Polysaccharid (EP-OS 166 362, Bsp. 7) | 100 g |
| | Acesulfam-K | 0,8 g |
| | Kirscharoma | 0,3 g |
| | Citronensäuremonohydrat | 1 g |
| | Farbstofflösung (Amaranth) | 2 g |

Zur Herstellung wurde das Polysaccharid unter Rühren vorsichtig geschmolzen und darin Citronensäure, Kirscharoma und der Farbstoff gelöst. Die Bonbons wurden anschließend im flüssigen Zustand gegossen. Es wurden Bonbons erhalten, die von mit Zucker hergestellten Kontrollen nicht zu unterscheiden waren.

| 5) Kirschbonbons | | |
|---|---|---|
| Bestandteile: | Polyglucose (DE-OS 23 50 035, Bsp. 1) | 100 g |
| | Acesulfam-K | 0,8 g |
| | Kirscharoma | 0,3 g |
| | Farbstofflösung (Amaranth) | 2 g |

Die Herstellung erfolgte wie im Beispiel 4. Auch hier wurden Bonbons erhalten, die von mit Zucker hergestellten Kontrollen nicht zu unterscheiden waren.

| 6) Gelatinebonbons | | |
|---|---|---|
| Bestandteile: | Gelatinelösung (30 %ig) | 100 g |
| | Citronensäuremonohydrat | 2,5 g |
| | Glycerin | 10 g |
| | Himbeeraroma | 0,2 g |
| | Polysaccharid (EP-OS 166 362, Bsp. 7) | 50 g |
| | Cyclamat | 1,5 g |

Zur Herstellung wurden sämtliche Zutaten in die heiße Gelatinelösung, die bei 80 °C gerührt werde, gegeben, bis eine klare Lösung erhalten wurde. Die Masse wurde in entsprechende Formen gegossen. Die gewonnenen Gelatinebonbons waren angenehm vollmundig.

| 7) Quarkspeise | | |
|---|---|---|
| Bestandteile: | Speisequark | 250 g |
| | Ei | 50 g |
| | Polysaccharid (EP-OS 166 362, Bsp. 3) | 80 g |
| | Aspartam | 0,5 g |
| | Vollmilch | 130 g |
| | Vanillezucker | 5 g |

Die nach Verrühren der Komponenten gewonnene Quarkspeise ließ sich geschmacklich nicht von einer mit Zucker hergestellten Probe unterscheiden.

**Ansprüche**

1. Lebensmittel mit Süßgeschmack mit vermindertem Kaloriengehalt, die als Füllstoffe mit niedrigem Brennwert wasserlösliche Polysaccharide enthalten, die durch Umsetzung von Aldohexosen oder Kohlenhydraten, die sich zu mindestens 50 Mol-% von Aldohexosen als Monomerbausteinen ableiten, gewonnen werden und die mit mehrwertigen Alkoholen modifiziert sind, dadurch gekennzeichnet, daß sie als Süßungsmittel in einer physiologisch annehmbaren Menge
a) Acesulfam oder
b) synthetische Süßstoffe allgemein und
c) solche der obengenannten Polysaccharide enthalten, bei deren Herstellung Fluorwasserstoff als Säure und gleichzeitig als Lösungsmittel verwendet worden ist.
2. Lebensmittel nach Anspruch 1, dadurch gekennzeichnet, daß sie als Süßungsmittel Acesulfam, Aspartam, Saccharin und/oder Cyclamat enthalten.
3. Lebensmittel nach Anspruch 1 oder 2, dadurch gekennzeichnet, daß sie zusätzlich einen Zuckeralkohol enthalten.
4. Lebensmittel nach einem oder mehreren der Ansprüche 1 bis 3, dadurch gekennzeichnet, daß sie in fester Form vorliegen.
5. Lebensmittel nach Anspruch 4, dadurch gekennzeichnet, daß sie in Form von Backwaren oder Süßwaren vorliegen.
6. Lebensmittel nach einem oder mehreren der Ansprüche 1 bis 3, dadurch gekennzeichnet, daß sie in flüssiger oder halbfester Form vorliegen.
7. Lebensmittel nach Anspruch 6, dadurch gekennzeichnet, daß sie als Gelatinedessert, Pudding oder Speiseeis vorliegen.
8. Lebensmittel nach Anspruch 6, dadurch gekennzeichnet, daß sie als Getränk vorliegen.
9. Lebensmittel nach einem oder mehreren der Ansprüche 1 bis 8, dadurch gekennzeichnet, daß die Komponente des mehrwertigen Alkohols im Polysaccharid in einer Menge von 0,01 bis 20 %, bezogen auf das Gewicht der Summe von Aldohexose und Kohlenhydrat, enthalten ist.

Europäisches
Patentamt

**EUROPÄISCHER RECHERCHENBERICHT**

Nummer der Anmeldung

EP 90 10 8579

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | EP-A-0 166 362 (HOECHST AG) * Seite 16, Beispiel 11; Seite 19, Beispiel 15; Ansprüche 1-10 * | 1,3,7 | A 23 L 1/29 <br> A 23 L 1/308 <br> A 23 G 9/02 <br> A 23 G 3/00 |
| D,A | GB-A-1 418 544 (PFIZER INC.) * Seite 5, Beispiele 1-3; Seite 8, Beispiele 14,15; Ansprüche 1-10 * | 1-3 | |
| A | PATENT ABSTRACTS OF JAPAN Band 9, Nr. 145 (C-287)(1868), 20. Juni 1985; & JP-A-6027344 (SANEI KAGAKU KOGYO K.K.) 12.02.1985 | 1,3,6,7 | |
| A | EP-A-0 184 045 (THE DOW CHEMICAL CO.) * Ansprüche 1-10 * | 1,2 | |
| A | WO-A-8 501 421 (M. WOLKENSTEIN) * Zusammenfassung; Ansprüche 1-23 * | 1-3,6-8 | |

**RECHERCHIERTE SACHGEBIETE (Int. Cl.5)**

A 23 L 1/00
A 23 G 9/00
A 23 G 3/00

Der vorliegende Recherchenbericht wurde für alle Patentansprüche erstellt

| Recherchenort | Abschlußdatum der Recherche | Prüfer |
|---|---|---|
| BERLIN | 10-08-1990 | SCHULTZE D |